Europäisches Patentamt

(19) European Patent Office

Office européen des brevets

(11) Publication number: **0 252 322 B1**

(12) **EUROPEAN PATENT SPECIFICATION**

(45) Date of publication of patent specification :
05.06.91 Bulletin 91/23

(51) Int. Cl.⁵ : **A61G 5/04**

(21) Application number : **87108361.4**

(22) Date of filing : **10.06.87**

(54) Improved drive for electric wheelchairs.

(30) Priority : **05.07.86 GB 8616434**

(43) Date of publication of application :
**13.01.88 Bulletin 88/02**

(45) Publication of the grant of the patent :
**05.06.91 Bulletin 91/23**

(84) Designated Contracting States :
**AT BE CH DE ES FR GR IT LI LU NL SE**

(56) References cited :
**US-A- 1 189 195**
**US-A- 3 770 073**
**US-A- 3 930 551**

(73) Proprietor : **THE SPASTICS SOCIETY**
**12 Park Crescent**
**London W1N 4EQ (GB)**

(72) Inventor : **Singleton, John Michael**
**50 Whitemoor Drive Monkspath**
**Solihull West Midlands (GB)**

(74) Representative : **Knowles, Audrey Elizabeth**
**624 Pershore Road**
**Selly Park Birmingham B29 7HG (GB)**

## Description

This invention relates to an improved drive for an electric wheelchair.

It is already known to provide electrically driven wheelchairs in which each driven wheel has an associated electric motor for driving the wheel with there being a proportional control means for controlling the drive transmitted to the wheels for regulating speed and steering. One problem which arises with such electrically driven wheelchairs is that of "freewheeling" which may be required if the batteries or one or more electric motors fail. In some types of electric wheelchairs, there is no means by which the drive transmission from the motor to the driven wheel can be disengaged or de-clutched in order for the desired "freewheeling" to be obtained. In such types of drives, if there is a failure, then it is often not possible to push the wheelchair manually or any manual pushing requires considerable effort because the motor and drive has to be turned.

It is already known to provide special constructions of drive transmissions which incorporate a special form of drive disengagement. One such construction using an idler gear in a gear transmission system is disclosed in US Patent No.3,930,551. Another construction uses a release pulley in a belt transmission. However, these disengagement systems are relatively expensive and increase the complexity of the drive transmission and often such disengagement cannot be easily operated by the wheelchair user who has to rely on an attendant to make any adjustments or change required. Furthermore, many of the drive transmissions utilising traditional forms of clutch or idler gears to obtain neutral or "freewheeling" increase the overall size of the drive transmission as well as the weight so that performance is reduced.

It is also known from US Patent No.3,770,073 to provide for drive disengagement by de-mounting the entire propulsion unit from the wheelchair.

It is an object of this invention to provide an electric wheelchair having a simple form of drive disengagement for the driven wheels which can be operated by the wheelchair user in an easy manner.

Other objects and advantages of this invention will be understood from the description of the invention as given later herein.

According to this invention, we provide an electrically driven wheelchair having a respective electric motor for each of two driven wheels, each wheel having a respective hub plate and being mounted for rotation on a respective spindle, and a respective manually operable lever for actuating an associated coupling device to engage and disengage the drive from each motor to the associated wheel for driven and free rotation respectively of the wheel on the associated spindle characterised in that each coupling device comprises a coupling pin mounted on one of the hub plate and a drive plate mounted on the spindle for driven rotation by the motor, one end of the coupling pin being engaged with a selected one of a plurality of arcuately spaced recesses in the other of the hub plate and drive plate to couple the hub plate and drive plate together for driven rotation of the wheel by the motor, and the other end of the coupling pin being connected to the associated lever which is positioned on the outboard side of the wheel, for access to the user, and is arranged on actuation to displace the coupling pin axially out of engagement with the recess to uncouple the hub plate from the drive plate for free rotation of the wheel on the spindle.

By this invention, the drive to the driven wheel(s) of the wheelchair may be uncoupled by simple lever actuation of a coupling pin which is engaged to couple the hub plate and drive plate together for normal driving of the wheel but which may be disengaged to uncouple the drive when required by the user operating a simple manual lever. The arrangement is simple and is quite separate to the motor and any gear box or reduction gear that might be mounted on the output shaft of the motor. Thus, this invention can be applied to various types and kinds of motor by merely providing the drive plate, the hub plate and the coupling pin assembly as part of the wheel assembly.

Preferably, the recesses are uniformly spaced arcuately apart, and at least six recesses would be provided although more could be provided, for instance up to twelve.

By this arrangement, the coupling pin may easily be engaged with any one of the recesses following prior uncoupling without requiring the wheel to be turned through 360°. This provides a facility for the wheelchair user merely to move the chair a few inches in order to re-engage the coupling pin.

Conveniently, the coupling pin is acted on by spring means urging the pin towards the selected recess so that the coupling pin is normally maintained in engagement with the selected recess by the spring force.

By such an arrangement, the manually operable lever merely has to displace the coupling pin against the spring force to disengage the coupling pin and thus uncouple the drive from the motor.

Preferably, the manually operable lever is located in a first position when the coupling pin is engaged with the selected recess, and the lever is located in a second position when the coupling pin is disengaged from a recess. Thus, inadvertent operation of the lever may be avoided.

The coupling pin assembly may be mounted on the hub plate with the recesses being provided in the drive plate. In such arrangement the drive plate is preferably positioned on the inboard side of the hub plate with the lever being positioned on the outboard side for access to the user.

Alternatively the coupling pin assembly may be mounted on the drive plate with the recesses being provided in the hub plate. In such arrangement the drive plate is preferably positioned on the outboard side of the hub plate with the lever positioned on the outboard side of the drive plate for access to the user.

By this invented wheelchair, the drive to the driven wheels may be disengaged or uncoupled by the user as, and when, required.

Other features of this invention in all it's aspects will be appreciated from the following description of exemplary embodiments of a wheelchair.

The exemplary embodiments of a wheelchair according to this invention are shown in the accompanying drawings wherein :

FIGURE 1 is a schematic side elevation of the wheelchair having both rear wheels driven by respective electric motors ;

FIGURE 2 is a rear elevation of the wheelchair shown in Figure 1 ;

FIGURE 3 is an enlarged partly sectional view of a first embodiment of a driven wheel and motor ;

FIGURE 4 is a further sectional view similar to the view of Figure 3 ;

FIGURE 5 is a detail sectional view of the coupling in the disengaged position ;

FIGURE 6 is a detail sectional view similar to that of Figure 5 but showing the coupling in the engaged position ;

FIGURE 7 is a view of the drive plate taken on line 7-7 shown in Figure 4 ; and

FIGURE 8 is an enlarged partly sectional view of a second embodiment of a driven wheel and motor.

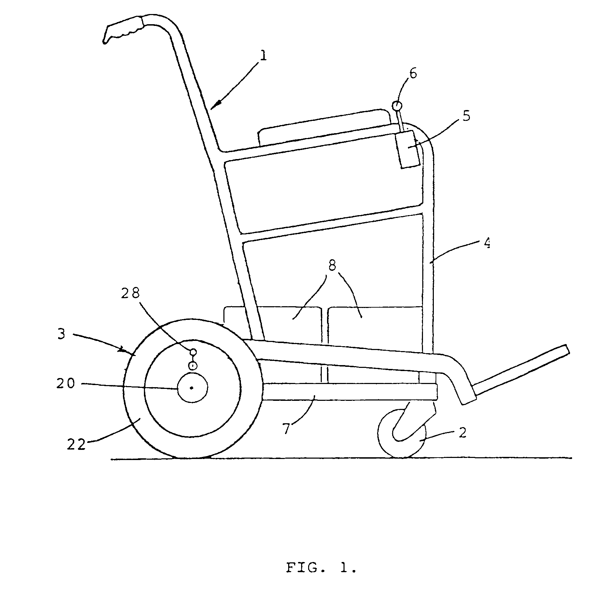

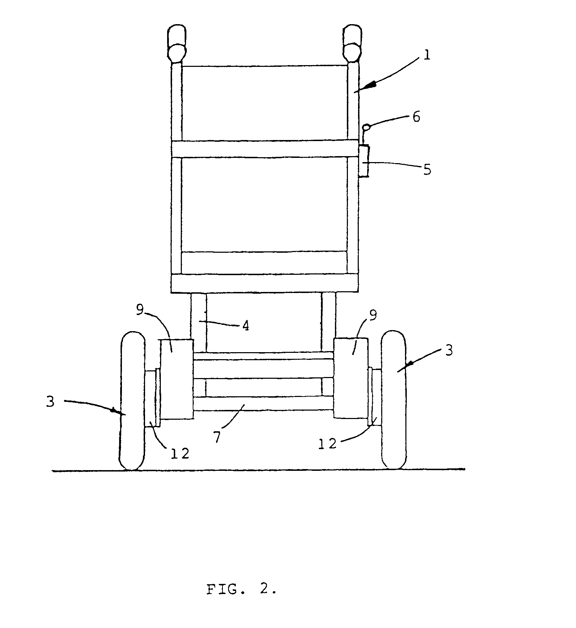

With reference to Figures 1 and 2 of the drawings, the wheelchair comprises a frame 1 of generally known kind and having a pair of front caster wheels 2 and a pair of rear driven wheels 3. The wheelchair has side frames 4 of which one supports a control means 5 having a joystick 6. A bearer member 7 extends across the lower part of the wheelchair providing a mount and carrier for batteries 8 which are connected to each of the electric motors 9 respectively associated with each driven wheel 3. In known manner, the control means is connected to the batteries and motors for controlling the motors and proportional control for driving and steering the wheelchair.

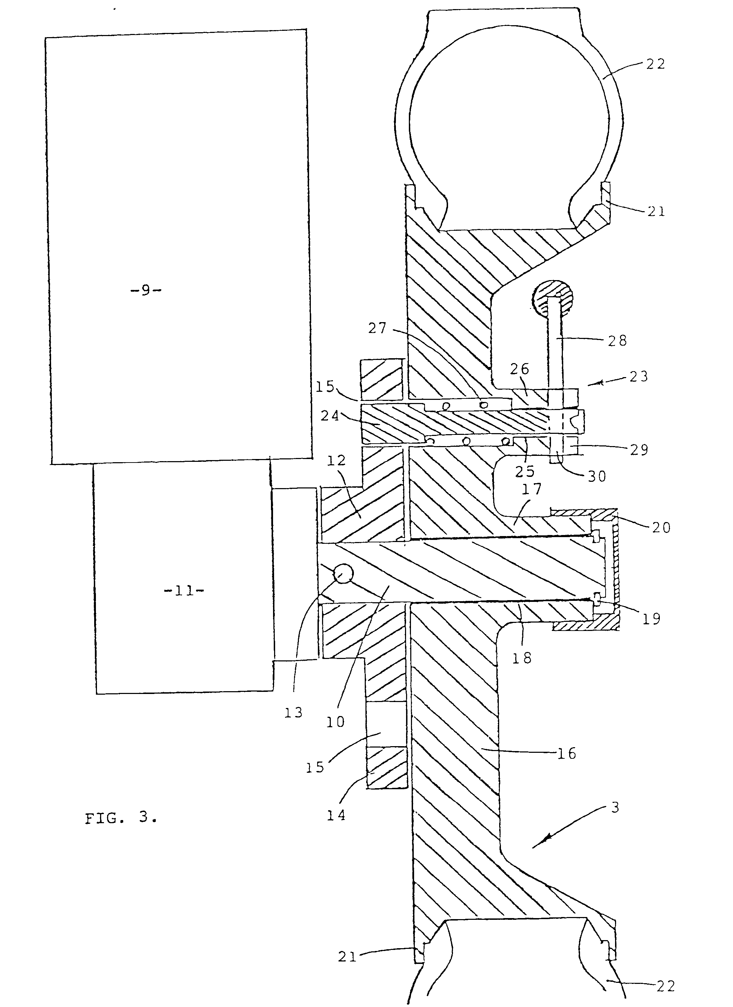

The arrangement for one driven wheel and motor according to a first embodiment of the invention will now be described with reference to Figures 3 to 7, it being understood that the other driven wheel and motor arrangement will be substantially the same.

As best shown in Figure 3, the motor 9 is connected to a spindle 10 through a reduction worm gearbox 11 to drive the spindle 10 as demanded by the user through the control means. A drive plate 12 is fixedly mounted on the inboard portion of the spindle 10 by a cross-key 13. The drive plate 12 has an annular flanged portion 14 which is provided with a series of arcuately spaced apart recesses 15.

The wheel 3 comprises a hub plate 16 having a central boss 17 mounting a bushing 18 through which the outboard end of the spindle 10 extends with there being a circlip retainer 19 mounted on the spindle to hold the wheel on the spindle in known manner. A spindle end cap 20 encloses both the spindle end and projecting part of the boss 17. The hub plate 16 has an outer rim portion 21 mounting a tyre 22.

A coupling device 23 is mounted in the hub plate 16 in the web portion intermediate the boss 17 and the rim 21. The coupling device 23 comprises a headed coupling pin 24 extending substantially parallel to the spindle 10 received in a counterbore 25 that extends both through the hub plate and a pillar boss 26 projecting outwardly of the hub plate 16. The larger end of the counterbore 25 receives a spring 27 arranged to act on the head of the pin 24 to urge same outwardly of the bore 25 towards and into an aligned recess 15 of the drive plate 12. The other end of the coupling pin 24 extends through the smaller part of the bore 25 and mounts a lever 28 that is accessible to the user outboard and just above the wheel centre as shown in Figure 1.

The pillar boss 26 is formed with a tranverse opening 29 in the form of diametric slot and the rod 30 of the lever 28 extends through a tranverse bore in the free end of the coupling pin 24. The rod 30 projects on either side of the end of the pin 24 and, as shown in Figures 3,4 and 6 is received within the transverse opening 29 and confined therein to provide a first located position of the lever 28 in which the headed pin engages with a respective recess 15 in the drive plate 12. The spring bias acting on the head of the coupling pin 24 maintains the coupling pin in engagement with the drive plate recess and the lever 28 cannot be inadvertently turned due to the interference of the side walls of the slot in the pillar boss 26.

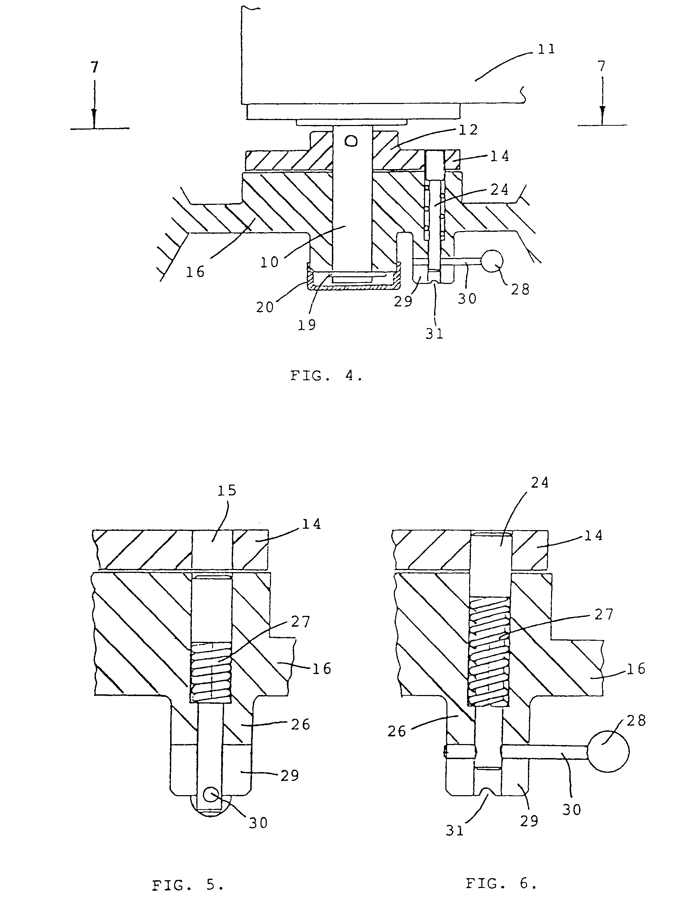

The outer end face of the pillar boss 26 is formed with a channel groove 31 for locating the rod 30 in a second position as shown in Figure 5 in which the coupling pin 24 is displaced against the spring bias to disengage the head of the pin from the recess 15 by pulling and turning the lever 28 through 90° until seated in the groove 31. Thus, the coupling pin is located in the second disengaged position, and due to the spring biass acting on the coupling pin, the lever 28 is biassed and maintained in engagement with the groove 31 against inadvertent displacement.

When the lever 28 is pulled and turned into the second position as shown in Figure 5, then the drive plate is uncoupled from the wheel, and the wheel is free to rotate on the spindle 10 in the manner of a "freewheel" so that the wheelchair can be manoeuvred or controlled manually without any force being required to turn the motor.

To recouple the wheel to the motor drive, all that is required is for the lever 28 to be pulled out to relieve the spring pressure so that the groove 31 is cleared by the rod 30, and then the head of the coupling pin will be urged towards the drive plate 12 for engagement within one of the recesses 15.

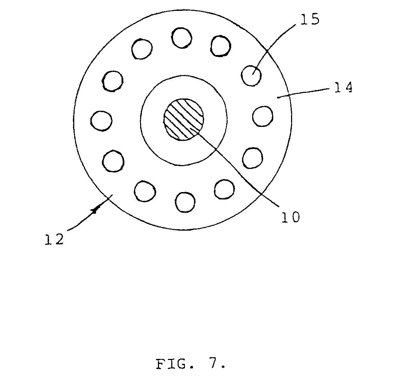

As shown in Figure 7, the drive plate has a series of twelve recesses 15 uniformly spaced around the flange 14 with each recess having a centre radially equi-spaced from the centre of the spindle 10 so that the coupling pin 24 may engage any one of the recesses 15 by rotating the wheel just a small arcuate distance if, on recoupling, the drive plate is not aligned with a recess 15 in register with the coupling pin head.

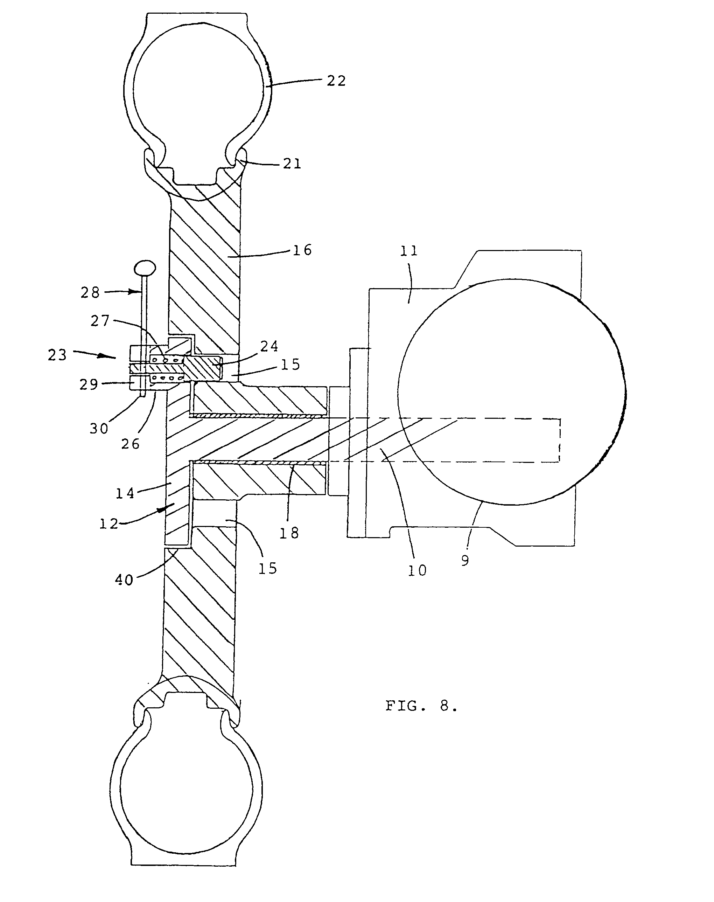

The arrangement for one driven wheel and motor according to a second embodiment of the invention will now be described with reference to Figure 8, it being understood that the arrangement for the other driven wheel and motor will be substantially the same. Where appropriate like reference numerals are used to indicate parts of the second embodiment corresponding to parts of the first embodiment above-described.

In this second embodiment, the hub plate 16, rotatably mounted on the spindle 10 by bushing 18, has an annular recess 40 on the outboard side in which the drive plate 12, fixedly mounted on the outboard end of the spindle 10, is received to hold the wheel 3 on the spindle 10, and the coupling device 23 is mounted in the drive plate 12 in the annular flanged portion 14 for engagement with the hub plate 16.

The coupling device 23 is of similar construction to that of the first embodiment and comprises the headed coupling pin 24 extending substantially parallel to the spindle 10 in the counterbore formed in the drive plate 12 and the pillar boss 26 which projects outwardly of the drive plate 12.

The series of arcuately spaced pin receiving recesses 15 are provided in the hub plate 16 and the coupling pin 24 is biassed by the spring 27 located in the counterbore to engage a selected aligned one of the recesses 15 for coupling the drive plate 12 and hub plate 16 together for driven rotation of the wheel 3 by the motor 9.

The coupling pin 24 is withdrawn from the recess 15 to uncouple the drive plate 12 and hub plate 16 for free rotation of the wheel 3 on the spindle 10 by pulling and turning the lever 28 provided at the outer end of the coupling pin 24 to locate the lever rod 30 in the channel groove (not shown) formed in the outer end face of the pillar boss 26 and is recoupled by the reverse operation as described in the first embodiment.

As will now be appreciated from the foregoing description of two exemplary embodiments of a driven wheel and motor according to the present invention, the wheelchair user can both couple and uncouple the drive to the wheels of the wheelchair by a simple lever movement not requiring any particular skill nor an attendant. The coupling device is very simple, and can be provided for various types of motors as may be used on wheelchairs.

The coupling device can be applied to wheelchairs having front wheel drive.

It is envisaged that the lever for operating the coupling pin may be arranged in a different manner, for instance the pillar boss could have cam faces in the slot to act in guiding the lever between the two located positions. Alternatively, the lever may be pivotally mounted on the end of the coupling pin with the slot being stepped from one side to the other so that the lever is located in one step for the first position and on turning through 180° is located in the other step for the axially displaced second position.

The arrangement and numbers of recesses may be varied, and eight or six recess may be sufficient for some sizes and applications of this invention. The recesses in the embodiments as just described are shown as through holes, but the recesses may be formed as blind bores if desired.

The arrangement and configuration of the wheel may be varied within the scope of this invention, and the pillar boss may not be an integral part of the hub plate (Figures 3 to 7) or the drive plate (Figure 8). The coupling device could be an assembly to be bolted or otherwise secured to a hub plate or drive plate at the appropriate position.

It is envisaged that the drive plate and the hub plate would engage each other when the coupling pin is engaged in the recess in order to provide thrust faces for drive transmission.

The advantages of this simple but expedient arrangement will be appreciated by those familiar with the design and construction of wheelchairs, and it will be understood that the actual form of the frame and construction of the wheelchair can be varied as required without detracting from the application of this invention to the electric drive arrangement.

**Claims**

1. An electrically driven wheelchair having a respective electric motor (9) for each of two driven wheels (3), each wheel (3) having a respective hub plate (16) and being mounted for rotation on a respective spindle (10), and a respective manually operable lever (28) for actuating an associated coupling device (23) to engage and disengage the drive from each motor (9) to the associated wheel (3) for driven and free rotation respectively of the wheel (3) on the associated spindle (10) characterised in that each coupling device (23) comprises a coupling pin (24) mounted on one of the hub plate (16) and a drive plate (12) mounted on the spindle (10) for driven rotation by the motor (9), one end of the coupling pin (24) being engaged with a selected one of a plurality of arcuately spaced recesses (15) in the other of the hub plate (16) and drive plate (12) to couple the hub plate (16) and drive plate (12) together for driven rotation of the wheel (3) by the motor (9), and the other end of the coupling pin (24) being connected to the associated lever (28) which is positioned on the outboard side of the wheel (3), for access to the user, and is arranged on actuation to displace the coupling pin (28) axially out of engagement with the recess (15) to uncouple the hub plate (16) from the drive plate (12) for free rotation of the wheel (3) on the spindle (10).

2. A wheelchair according to Claim 1 characterised in that the recesses (15) are uniformly spaced apart and wherein there are at least six such recesses (15) for selected engagement by the coupling pin (24).

3. A wheelchair according to Claim 1 or Claim 2 characterised in that the coupling pin (24) is acted on by spring means (27) urging the coupling pin (24) towards the selected recess (15) whereby the coupling pin (24) is normally maintained in engagement with the selected recess (15) by the spring force.

4. A wheelchair according to any one of the preceding Claims characterised in that the manually operable lever (28) is located in a first position (Figure 6) when the coupling pin (24) is engaged with the selected recess (15) and the lever (28) is located in a second position (Figure 5) when the coupling pin (24) is disengaged from such recess (15).

5. A wheelchair according to any one of the preceding Claims characterised in that the drive plate (12) is mounted on the spindle (10) for rotation therewith and the hub plate (16) is mounted for rotation on the spindle (10) by a bushing (18).

6. A wheelchair according to any one of the preceding Claims characterised in that the coupling pin (24) is mounted on the hub plate (16) and the recesses (15) are provided in the drive plate (12) with the drive plate (12) being positioned inboard of the hub plate (16) and the lever (28) positioned on the outboard side for access to the user.

7. A wheelchair according to any one of Claims 1 to 5 characterised in that the coupling pin (24) is mounted on the drive plate (12) and the recesses (15) are provided in the hub plate (16) with the drive plate (12) being positioned on the outboard side of the hub plate (16) and the lever (28) positioned on the outboard side of the drive plate (12) for access to the user.

8. A wheelchair according to Claim 4 characterised in that the coupling pin (24) extends substantially parallel to the spindle (10) and is received in a bore (25) that extends through a pillar boss (26) formed with a transverse opening (29), such as a diametric slot, in which a rod (30) of the lever (28) is received in the first position (Figure 6).

9. A wheelchair according to Claim 8 characterised in that an outer end face of the pillar boss (26) is formed with a channel groove (31) for locating the rod (30) in the second position (Figure 5).

10. A wheelchair according to Claim 8 characterised in that the pillar boss (26) has cam faces in the slot (29) to act in guiding the lever (28) between two located positions.

## Ansprüche

1. Elektrisch angetriebener Rollstuhl mit einem entsprechenden Elektromotor (9) für jedes der beiden angetriebenen Räder (3), wobei jedes Rad (3) eine entsprechende Nabenplatte (16) aufweist und drehbar auf einer entsprechenden Achse (10) angebracht ist und mit einem entsprechenden Bedienungshandgriff (28) zur Bedienung einer zugehörigen Kupplungsvorrichtung (23) zum Ein- und Auskuppeln des Antriebs von jedem Motor (9) zu dem zugehörigen Rad (3), um damit jeweils eine angetriebene oder freie Drehung des Rades (3) auf der zugehörigen Achse (10) zu ermöglichen, dadurch gekennzeichnet, daß jede Kupplungsvorrichtung (23) einen Kupplungszapfen (24) umfaßt, der entweder auf der Nabenplatte (16) oder auf der Antriebsplatte (12) angebracht ist, die auf der Achse (10) montiert ist, um durch den Motor (9) angetrieben zu rotieren, daß ein Ende des Kupplungszapfens (24) in Eingriff kommt mit wahlweise einem aus einer Vielzahl von ringförmig beabstandeten Ausnehmungen (15) in dem anderen Teil, entweder der Nabenplatte (16) oder der Antriebsplatte (12), um die Nabenplatte (16) und die Antriebsplatte (12) zusammenzukuppeln, um das Rad durch den Motor angetrieben rotieren zu lassen, und daß das andere Ende des Kupplungszapfens (24) mit dem entsprechenden Bedienungshandgriff (28) verbunden ist, der an der Außenseite des Rades (3) angebracht ist, damit er für den Benutzer zugänglich ist, und der so angeordnet ist, daß er bei Betätigung den Kupplungszapfen (28) axial verschiebt, so daß er außer Eingriff mit der Ausnehmung (15) kommt, um damit die Nabenplatte (16) von der Antriebsplatte (12) zu entkoppeln, so daß eine freie Drehung des Rades (3) auf der Achse (10) möglich ist.

2. Rollstuhl nach Anspruch 1, dadurch gekennzeichnet, daß die Ausnehmungen (15) gleichmäßig voneinander beabstandet sind, und daß zumindest sechs solche Ausnehmungen (15) für den wahlweisen Eingriff durch den Kupplungszapfen (24) vorgesehen sind.

3. Rollstuhl nach Anspruch 1 oder 2, dadurch gekennzeichnet, daß der Kupplungszapfen (24) von Federvorrichtungen (27) beaufschlagt wird, die den Kupplungszapfen (24) in Richtung auf die ausgewählte Ausnehmung (15) drücken, wobei der Kupplungszapfen (24) normalerweise durch die Kraft der Feder mit der ausgewählten Ausnehmung (15) in Eingriff gehalten wird.

4. Rollstuhl nach einem der vorhergehenden Ansprüche, dadurch gekennzeichnet, daß der Bedienungshandgriff (28) in einer ersten Stellung (Fig. 6) angeordnet ist, wenn der Kupplungszapfen (24) sich im Eingriff befindet mit der ausgewählten Ausnehmung (15), und daß der Bedienungshandgriff (28) in einer zweiten Stellung (Fig. 5) angeordnet ist, wenn der Kupplungszapfen (24) außer Eingriff mit einer solchen Ausnehmung (15) befindlich ist.

5. Rollstuhl nach einem der vorhergehenden Ansprüche, dadurch gekennzeichnet, daß die Antriebsplatte (12) auf der Achse (10) angebracht ist, so daß sie mit dieser rotiert und daß die Nabenplatte (16) mittels einer Laufbuchse (18) auf der Achse (10) angebracht ist.

6. Rollstuhl nach einem der vorhergehenden Ansprüche, dadurch gekennzeichnet, daß der Kupplungszapfen (24) auf der Nabenplatte (16) montiert ist, und daß die Ausnehmungen (15) in der Antriebsplatte (12) vorgesehen sind, wobei die Antriebsplatte (12) innerhalb der Nabenplatte (16) angebracht ist und der Bedienungshebel (28) auf der Außenseite angebracht ist, damit er für den Benutzer zugänglich ist.

7. Rollstuhl nach einem der Ansprüche 1 bis 5, dadurch gekennzeichnet, daß der Kupplungszapfen (24) auf der Antriebsplatte (12) angebracht ist und die Ausnehmungen (15) in der Nabenplatte (16) vorgesehen sind, wobei die Antriebsplatte (12) auf der Außenseite der Nabenplatte (16) angebracht ist und der Bedienungshandgriff (28) auf der Außenseite der Antriebsplatte (12) angebracht ist, damit er für den Benutzer zugänglich ist.

8. Rollstuhl nach Anspruch 4, dadurch gekennzeichnet, daß der Kupplungszapfen (24) sich im wesentlichen parallel zu der Achse (10) erstreckt und in einer Bohrung (25) aufgenommen ist, die sich durch einen pfeilerförmigen Anguß (26) erstreckt, der mit einer querverlaufenden Öffnung (29) in Form eines entlang des Durchmessers verlaufenden Schlitzes gebildet ist, in der eine Stange (30) des Bedienungshandgriffs (28) in der ersten Position (Fig. 6) aufgenommen ist.

9. Rollstuhl nach Anspruch 8, dadurch gekennzeichnet, daß eine äußere Endoberfläche des pfeilerförmigen Angusses (26) mit einer Kanalnut (31) versehen ist, in der die Stange (30) in der zweiten Stellung (Fig. 5) aufgenommen ist.

10. Rollstuhl nach Anspruch 8, dadurch gekennzeichnet, daß der pfeilerförmige Anguß (26) Nockenoberflächen in dem Schlitz (29) aufweist, die zur Führung des Bedienungshandgriffes (28) zwischen den beiden Endstellungen dienen.

**Revendications**

1. Fauteuil roulant propulsé électriquenent comprenant un moteur électrique (9) pour chacune des deux roues motrices (3), chaque roue (3) possédant respectivement une plaque de moyeu (16) et qui est montée pour la rotation sur un axe (10) correspondant, et qui possède un levier actionné de manière manuelle (28) pour commander un dispositif d'accouplement (23) correspondant afin d'enclencher et de désenclencher la transmission à partir ce chaque moteur (9) vers la roue correspondante (3) respectivement selon la rotation libre ou la rotation entraînée de la roue (3) sur l'axe correspondant (10) caractérisé en ce que chaque dispositif d'accouplement (23) comprend une broche d'accouplement (24) montée sur l'une des plaques de moyeu (16), et une plaque motrice (12) montée sur l'axe (10) pour la rotation entraînée par le moteur (9), une des extrémités de la broche d'accouplement (24) étant engagée dans une des encoches (15) choisie parmi une pluralité d'encoches disposées de manière espacée le long d'un arc, dans l'autre des plaque de moyeu (16) et plaque motrice (12) afin d'accoupler la plaque de moyeu (16) avec la plaque motrice (12) pour la rotation entraînée de la roue (3) par le moteur (9), et l'autre extrémité de la broche d'accouplement (24) étant reliée à un levier correspondant (28) qui est disposé sur le côté extérieur de la roue (3), pour permettre l'accès à l'utilisateur, et qui est utilisée pour la commande du déplacement axial de la broche d'accouplement (28) hors de la prise dans l'encoche (15) afin de désaccoupler la plaque de moyeu (16) de la plaque motrice (12) pour permettre la rotation libre de la roue (3) sur l'axe (10).

2. Fauteuil roulant selon la revendication 1 caractérisé en ce que les encoches (15) sont uniformément espacées et pour lequel il existe au moins six encoches (15) permettant de choisir la prise par la broche d'accouplement (24).

3. Fauteuil roulant selon la revendication 1 ou 2 caractérisé en ce que l'on agit sur la broche d'accouplement (24) au moyen de ressort (27) en amenant la broche d'accouplement (24) vers l'encoche choisie (15) pour laquelle la broche d'accouplement (24) est habituellement maintenue dans la prise dans l'encoche choisie (15) par la force due aux ressorts.

4. Fauteuil roulant selon l'une quelconque des revendications précédantes caractérisé en ce que le levier actionné de manière manuelle (28) est placé dans une première position (figure 6) lorsque la broche d'accouplement (24) est engagée dans l'encoche choisie (15) et le levier (28) est placé dans une seconde position (figure 5) lorsque la broche d'accouplement (24) est dégagée de cette encoche (15).

5. Fauteuil roulant selon l'une quelconque des revendications précédentes caractérisé en ce que la plaque motrice (12) est montée sur l'axe (10) pour la rotation et la plaque de moyeu (16) est montée pour la rotation sur l'axe (10) au moyen d'une bague (18).

6. Fauteuil roulant selon l'une quelconque des revendications précédentes caractérisé en ce que la broche d'accouplement (24) est montée sur la plaque de moyeu (16) et les encoches (15) sont prévues dans la plaque motrice (12), la plaque motrice (12) étant disposée vers l'intérieur de la plaque de moyeu (16) et le levier (28) étant disposé sur le côté extérieur afin de permettre l'accès à l'utilisateur.

7. Fauteuil roulant selon l'une quelconque des revendications 1 à 5 caractérisé en ce que la broche d'accouplement (24) est montée sur la plaque motrice (12) et les encoches (15) sont prévues dans la plaque de moyeu (16), la plaque motrice (12) étant disposée sur le côté extérieur de la plaque de moyeu (16) et le levier (28) étant disposé sur le côté extérieur de la plaque motrice (12) pour permettre l'accès à l'utilisateur.

8. Fauteuil roulant selon la revendication 4 caractérisé en ce que la broche d'accouplement (24) s'étend essentiellement de manière parallèle à l'axe (10) et est disposée dans un logement (25) qui s'étend à travers une protubérance (26) formée dans une ouverture transversale (29) telle qu'une rainure circulaire dans laquelle une tige (30) du levier (28) est disposée dans la première position (figure 6).

9. Fauteuil roulant selon la revendication 8 caractérisé en ce que la face d'extrémité extérieure de la protubérance (26) est formée par une rainure en forme de canal (31) qui permet de loger la tige (30) dans la seconde position (figure 5).

10. Fauteuil roulant selon la revendication 8 caractérisé en ce que la protubérance (26) possède des surfaces en forme de came dans la rainure (29) de manière à guider le levier (28) entre les deux positions.

FIG. 1.

FIG. 2.

FIG. 3.

FIG. 4.

FIG. 5.

FIG. 6.

FIG. 7.

FIG. 8.